## Europäisches Patentamt

## European Patent Office

## Office européen des brevets

(19)

(11) Veröffentlichungsnummer: **0 087 726**
**A2**

(12) # EUROPÄISCHE PATENTANMELDUNG

(21) Anmeldenummer: 83101675.3

(22) Anmeldetag: 22.02.83

(51) Int. Cl.³: **C 07 G 1/00**
**A 23 K 1/16**
**//A61K35/78**

(30) Priorität: 26.02.82 DE 3206911

(43) Veröffentlichungstag der Anmeldung:
07.09.83 Patentblatt 83/36

(84) Benannte Vertragsstaaten:
AT BE CH DE FR GB IT LI LU NL SE

(71) Anmelder: Lohmann Tierernährung GmbH
Neufelder Strasse 24-28
D-2190 Cuxhaven(DE)

(72) Erfinder: Mach, Walter J., Dr.
Wasserburgerstrasse 17
D-8011 Kirchseeon/München(DE)

(74) Vertreter: UEXKÜLL & STOLBERG Patentanwälte
Beselerstrasse 4
D-2000 Hamburg 52(DE)

(54) Biochemischer Wirkstoff, dessen Herstellung und diesen Wirkstoff enthaltendes Mittel.

(57) Biochemischer Wirkstoff mit anaboler Bioaktivität zur Beeinflussung des intrazellulären und systemischen Metabolismus höherer Organismen, der aus wasserlöslichen, sauren Inkohlungsprodukten lignoider Naturstoffe in Form entkationisierter Alkalisalze besteht, deren katabole Aktivität durch Umsetzung mit Spurenmetallionen definiert inhibiert ist. Zur Herstellung des Wirkstoffs werden Inkohlungsprodukte lignoider Naturstoffe mit wäßriger Alkalihydroxidlösung behandelt. Die resultierende Lösung wird auf einen schwach sauren pH-Wert eingestellt und mit einer Spurenmetallsalzlösung versetzt. Die so erhaltene Reaktionsmischung wird gegebenenfalls nach Zusatz eines für den Wirkstoff geeigneten Trägermaterials getrocknet. Beschrieben wird ferner ein Mittel zur Förderung des Wachstums bzw. zur Anwendung bei Stoffwechselstörungen von höheren Organismen, das diesen Wirkstoff enthält.

./...

EP 0 087 726 A2

**UEXKÜLL & STOLBERG**

PATENTANWÄLTE

BESELERSTRASSE 4
D-2000 HAMBURG 52

EUROPEAN PATENT ATTORNEYS

**0087726**

DR J D FRHR von UEXKÜLL
DR ULRICH GRAF STOLBERG
DIPL-ING JURGEN SUCHANTKE
DIPL-ING ARNULF HUBER
DR ALLARD von KAMEKE
DR KARL-HEINZ SCHULMEYER

Lohmann
Tierernährung GmbH
Neufelder Straße 24 - 28

2190 Cuxhaven

(19338/KA/wo)

Februar 1983


Biochemischer Wirkstoff, dessen Herstellung und

diesen Wirkstoff enthaltendes Mittel


Beschreibung


Die Erfindung betrifft einen biochemischen Wirkstoff, dessen Herstellung und ein diesen Wirkstoff enthaltendes Mittel.

Wachstumsfördernde Substanzen werden in der Tiermast zur Erzielung schnelleren Wachstums und erhöhter Fleischproduktion eingesetzt. Die bekannten wachstumsfördernden Substanzen gehören entweder der Gruppe der Antibiotika, der Gruppe der chemisch produzierten Wachstumsförderer oder der Gruppe der Sexualhormone an. Die Verwendung von Sexualhormonen als Wachstumsförderer in der Tiermast ist u.a. aufgrund der Geschlechtsspezifität vom Gesetzgeber untersagt worden, so daß es nicht an Vorschlägen gefehlt hat, auf andere Stoffgruppen auszuweichen. So wurden zum Beispiel in jüngster Zeit Pflanzenextrakte mit möglicherweise geeigneten Eigenschaften - "Phytoadaptogene" - z.B. aus Eleutherococcus senticosus getestet (Kaemmerer und Mitarbeiter, Der praktische Tierarzt 9/1980, S. 748-760). Derartigen Wachstumsförderern sind jedoch aufgrund der sehr großen erforderlichen Mengen herstellungsbedingte Grenzen gesetzt, da man beispielsweise bei einem Zusatz von 1 % derartiger Wachstumsförderer zu nur 10 % der in der Bundesrepublik Deutschland verbrauchten Geflügelmischfuttermittel etwa 350 000 kg Eleutherococcus-Trockenmasse herstellen müßte (a.a.O.). Darüber hinaus schwanken die Eigenschaften solcher Pflanzenextrakte in Abhängigkeit von Anbau- und Erntebedingungen, Anbauland und Pflanzensorte und es sind erhebliche Anbauflächen notwendig.

Eine weitere Gruppe infrage kommender pflanzlicher Substanzen sind (nach Mach, W.J.: Die Ernährungsumschau 7 (1971) 259-260) postmortal auftretende, radikalische Reaktionsfolgeprodukte vom Typ der Melanoidine (z.B. Reaktionsprodukte der Maillard-Reaktion). Die Kenntnis dieser Stoffe führte unter anderem zu Untersuchungen über den Chemismus von postmortalen Verbindungen im Braun-Heu bzw. Brenn-Heu, deren die Freßlust steigernde Wirkung bekannt ist (Handbuch der Futtermittel, Band 1, P. Parey, Berlin, 1967), aber bisher nicht systematisch eingesetzt worden sind.

Das Verfahren der Braun- bzw. Brenn-Heu-Herstellung ist zwar schwer steuerbar und hat keine wirtschaftliche Bedeutung mehr, bei richtiger Prozeßführung treten dabei jedoch, wie Emmerling schon vor mehr als 100 Jahren zeigen konnte, aromatisch-chinoide Folgeprodukte nach dem Prinzip der Reaktion mit nascierenden Chinonen auf, die zu der Gruppe der Melanoidine gerechnet werden (s.o.). Der Begriff Melanoidine steht als Sammelbegriff für Bräunungsprodukte, wie sie z.B. auch bei der Erhitzung mancher Nahrungsmittel als erwünschte oder auch unerwünschte Reaktionsprodukte auftreten (vgl. Ernährungs-Umschau 1971, 295). Es handelt sich hierbei um schlecht isolierbare Formen postmortaler pflanzlicher Reaktionsfolgeprodukte (Radikalkondensationsprodukte), die durch ESR-Spektroskopie nachweisbare Struktureinheiten mit ungepaarten Elektronen besitzen können. Melanoidine können darüber hinaus unter physiologischen Bedingungen aus pflanzlichen Ballaststoffen, soweit sie Lignin enthalten, durch Darmbakterien gebildet werden (Dirscherl, Revue Roumaine de Biochemie 1, 1966).

Natürliche Stoffe, die zu der großen und chemisch wenig definierten Gruppe der Melanoidine gehören, findet man außerdem in verhältnismäßig kleinen Mengen und unterschiedlichem Chemismus auch in Kaffeextrakten, in Bakterienkulturen (z.B. bac. subtiles, bac. Coli u.ä.) und in Kulturen niedriger Pilze (z.B. Actinomyceten). Ferner kann man "Melanoidine" künstlich durch oxydative Umsetzungen von Hydrochinon und durch strahlenchemische Synthesen (z.B. UV + Tyrosin) herstellen. Weiterhin findet man solche Stoffe auch in bestimmten Rotte-Produkten, im Torf, in Bier und in manchen Pflanzenextrakten. Die meisten dieser Rohstoffe sind jedoch für die industrielle Anwendung ungeeignet, da sie keine wirtschaftlichen Ausbeuten ergeben oder chemisch-physikalisch ungeeignet sind.

Eingehende Arbeiten zur Aufklärung der humantherapeutischen Effekte auf den Verdauungstrakt und den Stoffwechsel von Melanoidinen wie Kaffee-Melanoidinen (Ernährungs-Umschau a.a.O.), sogenannten Carbo coffeae und dem Buttertee der Tibeter ergaben jedoch, daß die antihepatoxische Wirkung von Stoffgruppen dieses Typs (Melanoidinsäuren) allein nicht geeignet ist, auch wachstumsfördernd zu wirken. Bei der die Freßlust steigernden Wirkung von Braun- bzw. Brenn-Heu handelt es sich vermutlich mehr um einen sinnesphysiologischen (Aroma-Effekt) als einen sicheren Wachstumsförderer-Effekt.

Nach Schole (Veröffentlichung auf Grundlage eines in Cuxhaven am 21. 10. 1981 gehaltenen Vortrags) beruht die wachstumsfördernde Wirksamkeit anaboler Substanzen primär auf einer Stimulierung des Synthesestoffwechsels der Zellen, ausgelöst durch die Einschränkung der Aktivität von radikalbildenden Enzymen in den Membransystemen der Zelle. Diese radikalbildenden Enzyme schränken durch Oxydation der in allen cytoplasmatischen und nuklearen Synthesezyklen enthaltenen empfindlichen SH-Enzyme den Synthesestoffwechsel ein. Zum Schutz der SH-Enyzme muß die Zelle Red-Ox-Systeme (z.B. das Glutathionsystem) bereithalten. Werden jedoch die radikalbildenden Membranenzyme durch von außen zugeführte Faktoren blockiert, so wird der Synthesestoffwechsel der Zelle durch Aktivierung der Synthesezyklen im Cytoplasma und Zellkern gesteigert. Als anabole Faktoren kommen Substanzen in Betracht, die ihrerseits aktive Red-Ox-Systeme (Elektronen-Donator-Akzeptor-Systeme) darstellen. Der gesteigerte Synthesestoffwechsel erfordert seinerseits eine erhöhte Energiemenge in Form von Adenosintriphosphat (ATP). Zur Sicherstellung dieser Energie wird in Gegenwart eines intensivierten Synthesestoffwechsels eine hormonelle Gegenreaktion im Organismus ausgelöst. Die katabol wirksamen Hormone der Nebennierenrinde sowie das Thyroxin sorgen für den Abbau von Reservesubstanz und damit für Bereitstellung von ATP. Die Zelle wird also dann zu optimaler Leistung fähig sein, wenn ein anaboler Faktor die den Synthesestoffwechsel hemmenden Enzymradikale vermindert und gleichzeitig katabole Faktoren zwar für ausreichend ATP sorgen, aber keine überschiessende katabole Hormon- oder sonstige Reaktion stattfindet.

Es wurde nun gefunden, daß experimentiell faßbare Stoffwechselregulationseffekte (adaptogene Wirkung) pflanzlicher Wachstumsförderer auf der Koexistenz sowohl katabol- wie anabol-aktiver Strukturelemente beruhen. Versuche zeigten, daß die Feinabstimmung anaboler und kataboler Aktivitäten eines für die Tieraufzucht geeigneten pflanzlichen Wachstumsförderers unabdingbare Voraussetzung ist.

Basierend auf diesen Versuchen ergab sich bei der erneuten Untersuchung von wasserlöslichen Melanoidinen (das Alkalisalz der Melanoidinsäure bildet nach Kationenaustausch eine im pH-Bereich von 7,0 bis 5,0 echt wasserlösliche Substanz) überraschend, daß die anabole und katabole Aktivität von lignoiden Melanoidinen mit anabol- und katabol-aktiven Struktureinheiten, bei denen es sich um chinoid-aromatische, resorbierbare Folgeprodukte radikalischer Kondensationsreaktionen handelt, kontrolliert abgeglichen (Feinabstimmung) werden kann, indem die katabole Aktivität definiert inhibiert wird. Ohne diese kontrollierte Abgleichung der anabolen und katabolen Aktivitäten wird eine dauerhafte Wachstumssteigerung bei der Tieraufzucht durch Verwendung von lignoiden Melanoidinen als Wachstumsförderer nicht erreicht. Es wurde ferner gefunden, daß die erfindungsgemäß geeigneten Inkohlungsprodukte lignoider Naturstoffe chinoide Struktureinheiten, d.h. Struktureinheiten vom Chinon-, Semichinon- und Chinhydron-Typ aufweisen und durch ESR-Spektroskopie nachweisbare, ungepaarte Elektronen besitzen.

Gegenstand der Erfindung ist dementsprechend ein biochemischer Wirkstoff mit anaboler Bioaktivität zur Beeinflussung des intrazellulären und systemischen Metabolismus höherer Organismen, der dadurch gekennzeichnet ist, daß er aus wasserlöslichen, sauren Inkohlungsprodukten lignoider Naturstoffe in Form entkationisierter Alkalisalze besteht, deren katabole Aktivität durch Umsetzung mit Spurenmetallionen definiert inhibiert ist. Gegenstand der Erfindung sind ferner ein Verfahren zur Herstellung dieses Wirkstoffs und ein diesen enthaltendes Mittel.

Zur Herstellung des biochemischen Wirkstoffs werden natürliche oder künstliche Inkohlungsformen von ligninhaltigen Naturstoffen wie Laubholz, Nadelholz oder Gräser bei 5 - 35° C, vorzugsweise 15 - 25° C (z.B. Raumtemperatur) mit einer wäßrigen Alkalihydroxydlösung (Natrium, Kalium, Lithium, Ammonium, vorzugweise Kalium) extrahiert. Der Extrakt wird dann durch geeignete Verfahren wie z.B. Zentrifugieren oder Dekantieren von nicht echt gelösten Schwebstoffen befreit und bei $5 - 35^{\circ}$ C, vorzugsweise $15 - 25^{\circ}$ C (z.B. Raumtemperatur) 3 bis 60 Tage, vorzugsweise 5 bis 30 Tage (längere Zeiten sollten vermieden werden, da dann das Endprodukt normalerweise eine geringere Aktivität besitzt) aufbewahrt. Der immer noch hoch alkalische Extrakt (pH etwa 11 - 13) wird dann auf schwach saure pH-Werte, vorzugsvon 5,0 bis 6,5 eingestellt. Dies geschieht vorzugsweise durch portionsweise Zugabe stark saurer Ionenaustauscher (z.B. Amberlite IR 120) in der Wasserstofform, wobei der Ionenaustauscher nach Erreichen des gewünschten. pH-Wertes abgetrennt wird. Anschließend wird der Trockenstoffgehalt der schwach sauren Lösung bestimmt.

Die schwach saure Lösung wird dann mit einer Spurenmetallsalzlösung versetzt. Geeignet sind Lösungen von Salzen, insbesondere Chloriden, essentieller Spurenelemente wie Kobalt, Eisen, Kupfer, Nickel, Mangan und/oder Zink, wobei Kobaltsalze bevorzugt sind. Die Konzentration der Metallsalzlösung beträgt vorzugsweise 0,1 bis 0,5 m. Aufgrund von Untersuchungen der durch den Zusatz der Metallsalze ablaufenden Reaktion (Leitfähigkeitsmessungen) ist davon auszugehen, daß die Melanoidine mit den zugesetzten Metallionen Chelatkomplexe bilden. Durch diese Komplexbildung, die zu einer Intensitätsabnahme des ESR-Signals führt, werden offensichtlich die katabol-aktiven Strukturelemente der Melanoidine blockiert. Dementsprechend können grundsätzlich anstelle der genannten essentiellen Spurenmetalle auch andere Metalle verwendbar sein, vorausgesetzt, daß sie physiologisch unbedenklich und zur Blockierung der katabolen Aktivität durch Komplexbildung in der Lage sind. Es hat sich allerdings in Übereinstimmung mit den oben diskutierten Ergebnissen gezeigt, daß im allgemeinen eine vollständige Blockierung der katabolen Aktivität der Melanoidine nicht zu der erwünschten Wachstumssteigerung führt. Deshalb wird die Umsetzung der Melanoidine mit der Metallsalzlölsung vorzugsweise nur so weit durchgeführt, daß eine partielle·Blockierung der katabolen Aktivität der Melanoidine eintritt. Der Begriff "definierte Inhibierung" bedeutet also primär eine partielle Blockierung der katabolen Aktivität, kann aber in Abhängigkeit von der vorgesehenen Anwendung (siehe unten: z.B. Tierart und andere Faktoren) auch eine vollständige Blockierung (praktisch völliges Verschwinden des ESR-Signals) der katabol-aktiven Struktureinheiten umfassen. Eine partielle Blockierung kann gegebenenfalls auch dadurch erzielt werden, daß man nicht blockierte Chargen und vollständig oder nahezu vollständig blockierte Chargen im gewünschten Verhältnis miteinander vermischt. Dies vereinfacht die Herstellung und verringert die mit Spurenmetallsalzlösung umzusetzende Extraktmenge. Weiterhin erlaubt diese Verfahrensweise die einfache Herstellung von Wirkstoffen mit einem bestimmten Blockierungsgrad, wenn erst einmal der optimale Blockierungsgrad ermittelt worden ist.

Da es sich bei den entionisierten lignoiden Melanoidinen um extrem kompliziert gebaute, multivariante Red-Ox-Systeme handelt und der intrazelluläre Stoffwechselregulationseffekt primär zudem eine wiederum extrem komplexe elektronenbiologische Reaktionskette beinhaltet, ist es nicht möglich, die katabole Aktivität dieser Verbindungen chemisch quantitativ zu definieren oder eine lineare Beziehung zwischen Wachstumsförderer-Effekt bei gegebener ppm-Zahl im Futter und dem Grad der chelatbedingten ETU-Inhibierung (electron transfer units = Elektronenübertragungssysteme lignoider Struktur, deren Vorhandensein für die katabole Aktivität verantwortlich zu machen ist) zu finden. Es muß vielmehr zwischen dem vorgegebenen Melanoidin-Typ und dem Grad der metallbedingten Inaktivierung der katabolen Aktivität eine rein tierexperimentell fundierte Über-

einstimmung ermittelt werden. Voraussetzung ist jedoch in allen Fällen, daß das verwendete Melanoidin über durch ESR-Spektroskopie nachweisbare, freie Radikale verfügt. Bei dem Begriff der katabolen Aktivität handelt es sich also nicht um eine quantitativ und chemisch festgelegte Größe, sondern um eine biologische Aktivität, die im wesentlichen von der jeweiligen Tierart aber auch von anderen Faktoren wie beispielsweise der ppm-Zahl im Futter abhängt. Mit anderen Worten heißt dies, daß die katabole Aktivität zwar qualitativ durch das Vorhandensein des ESR-Signals nachweisbar ist, aber quantitativ physikalisch nicht erfaßbar ist. Man geht deshalb so vor, daß man in der beschriebenen Weise aus einem lignoiden Inkohlungsprodukt Produkte mit unterschiedlichem Metallgehalt herstellt und diese dann tierexperimentiell untersucht. Auf diese Weise ist es möglich, für jede Tierart und jedes Metall die optimale partielle Blockierung der katabolen Aktivität, d.h. den optimalen Metallgehalt des erfindungsgemäßen Wirkstoffs für jede Tierart zu ermitteln, ohne daß die katabole Aktivität der Ausgangssubstanz quantitativ festgestellt zu werden braucht.

Um reproduzierbare Verhältnisse zu schaffen, geht man bei der oben beschriebenen Verfahrensweise praktisch so vor, daß man vor Zusatz der Metallsalzlösung den Trockenstoffgehalt der Melanoidinlösung bestimmt. Dies geschieht beispielsweise dadurch, daß man eine Probe der Lösung mittels Infrarottrocknung bei Oberflächentemperaturen von maximal 75°C eindampft und die zurückbleibende Feststoffmenge ermittelt. Dann setzt man Melanoidinlösungen mit zuvor ermitteltem, bekannten Trockenstoffgehalt unterschiedliche Mengen Metallsalzlösung bekannter Konzentration zu, so daß man zu Proben mit unterschiedlichem Verhältnis von Melanoidin-Trockenstoff zu Metallsalz bzw. Metallionen gelangt. Im Tierversuch zeigt sich dann, daß sowohl zu hohe als auch zu niedrige Werte für das Trockenstoffverhältnis (bzw. den Metallgehalt des erfindungsgemäßen Wirkstoffes) keine oder zumindest keine optimale Wachstumssteigerung ergeben. Bei Verwendung von Lignit als Ausgangsmaterial und Kobalt als Spurenmetall wurde auf diese Weise zum Beispiel gefunden, daß das Trockenstoffverhältnis bei 17,3 (auf 1 g Feststoff der Melanoidinlösung kommen 58 mg $CoCl_2 \cdot 6H_2O$) liegen muß, damit bei einer Futterkonzentration von 50 ppm beim Schwein optimale Wachstumssteigerungen erreicht werden.

Aus der nach Zugabe der Metallsalzlösung resultierenden Reaktionsmischung wird der erfindungsgemäße Wirkstoff durch schonendes Einengen bei maximal 75°C und/oder durch Gefriertrocknung gewonnen. Alternativ kann die Trocknung gemeinsam mit einem geeigneten Trägermaterial wie Maisspindelmehl, Weizennachmehl, anderen Mühlennachprodukten oder üblichen anorganischen Trägerstoffen durchgeführt werden. Üblicherweise beträgt der Anteil des Trägermaterials 50 bis 95 % und vorzugsweise 80 bis 90 %. Bei höherer Wirkstoffkonzentration sind vor Verfütterung weitere Abmischungen erforderlich, da sonst die geringen Wirkstoffgehalte im Futter (siehe oben, z.B. 50 ppm) nicht zuverlässig eingestellt werden können.

Als Ausgangssubstanzen können gegebenenfalls auch die oben bereits erwähnten anderen Melanoidine enthaltenden Stoffe verwendet werden, vorausgesetzt sie weisen einen ausreichenden Gehalt an freien Radikalen auf und lassen eine partielle Blockierung der katabolen Aktivität durch Umsetzung mit Metallsalzlösungen zu. Außerdem können erfindungsgemäß geeignete Melanoidine (Ligninmelanoidinsäuren) durch biotechnologische Umsetzung von Holz- oder Strohmehl (z.B. aufbereitete Verrottungsprodukte) erhalten werden. Ferner kann man beispielsweise als künstliche Inkohlungsform (Inkohlungsderivat) "inkohltes" Laubholzlignin verwenden, das durch alkalische Umsetzung in Sauerstoffgegenwart (Wasserstoffperoxid) und Abtrennung der peptisierten Fraktionen gewinnbar ist.

Als besonders bevorzugte Ausführungsform der Erfindung hat sich das nach dem folgenden Herstellungsverfahren gewonnene Produkt erwiesen. Lignitpulver wird bei Raumtemperatur in 0,4 m KOH-Lösung unter Rühren in das lösliche Kaliumsalz überführt und nach 24 Stunden durch Feststofftrennung (Zentrifuge, Dekanter) von dem alkali-unlöslichen Anteil befreit. Das Sediment wird verworfen. Der Überstand wird etwa 28 Tage bei Raumtemperatur aufbewahrt, dann wird eine Probe entnommen und durch Infrarottrocknung bei Oberflächentemperaturen von maximal $75^{\circ}$ C eine Trockenstoffbestimmung durchgeführt, nachdem vorher mittels eines hochsauren Kunstharz-Ionenaustauschers (Amberlite IR-120 pract) in der $H^+$-Form die hochalkalische (pH 12-13) Alkalilignitlösung entionisiert und so auf einen pH-Wert von 5,5 gebracht worden ist. Anschließend werden bei $20^{\circ}$ C unter Rühren zu 100 ml 1 %iger saurer Lignitmelanoidinlösung 2,423 ml einer 0,1 m-Kobalt(II)-chloridlösung gegeben.

Die Umsetzung wird nach 10 Minuten beendet. Die resultierende, das Lignitkobaltchelat enthaltende, saure Lösung wird dann unter schonenden Bedingungen, z.B. an der Luft bei Temperaturen von nicht über 75$^\circ$ C oder durch Gefriertrocknung zur Trockne gebracht und kann in bekannter Form, z.B. durch Abmischen mit geeigneten Trägermaterialien, anderen üblichen Zusätzen und weiteren Wirkstoffen weiterverarbeitet werden. Vorteilhafterweise kann das Trägermaterial auch bereits vor Einengen der Lignitkobaltchelatlösung zugesetzt werden, so daß sich das Lignitkobaltchelat nach dem Trocknen auf dem Trägermaterial befindet. In diesem Zusammenhang hat sich die Wirbelschicht-Sprühtrocknung beispielsweise unter Verwendung eines organischen Trägers als gut geeignet erwiesen.

Durch Kaltextraktion bei einem pH-Wert von etwa 7,2 (z.B. 100 ml leicht alkalisch gemachtes demineralisiertes Wasser auf 3 g pulverförmige Probe) aus der Vormischung aus Lignitkobaltchleat und Trägermaterial gewonnene Lösungen zeigen im UV-Spektrum zwischen etwa 190 bis 500 nm eine gleichmäßige Absorption ohne Ausbildung ausgeprägter Maxima. Demgegenüber besitzen die Fluoreszenz-Emissionsspektren eine Peak zwischen 369 und 548 nm, wobei das Maxima bei 450 nm liegt und sich bei 500 nm eine gut ausgebildete Schulter befindet. Ferner führen diese Lösungen beim Redox-Test mit Methylenblau zu einer Veränderung des Absorptionsspektrums von Methylenblau, d.h.die Positionen der Maxima und deren Peakhöhe verändern sich, was die Bildung von Leukomethylenblau auf Grund einer Redoxreaktion anzeigt. Ähnlich wird das Absorptionspektrum von Neutralrot bei Umsetzung mit diesen Lösungen verändert. Entsprechende Ergebnisse liefern auch in entsprechender Weise hergestellte Lignitchelate der anderen oben genannten Metalle.

Die erfindungsgemäßen Substanzen haben bei Wachstumsversuchen mit Ratten und Schweinen eine deutliche Wachstumssteigerung (Mehrzuwachs gegenüber Null-Kontrolle) ergeben. Hierauf wird im einzelnen in den Beispielen 3 bis 6 eingegangen. Ähnliche Effekte sind bei Geflügel, Kälbern, Wiederkäuern und anderen landwirtschaftlichen Nutztieren zu beobachten. Unter den Begriff "Nutztiere" fallen dabei auch pelzliefernde Tiere. Aufgrund seines Einflusses auf den Synthesestoffwechsel der Zellen eignet sich der erfindungsgemäße Wirkstoff auch zur human- und/oder tiermedizinischen Anwendung bei Stoffwechselstörungen. So wird insbesondere bei Zuchttieren (Einschränkung der natürlichen Bewegungsfreiheit) durch Anwendung des erfindungsgemäßen Wirkstoffs eine bessere Knochenbildung und im Fall von Pelztieren darüberhinaus ein schöneres Fell erzielt. Auf dem humanmedizinischen Gebiet ist der erfindungsgemäße Wirkstoff beispielsweise für die Schnellheilung von Knochenbrüchen bei Sportlern vorgesehen.

Neben der oben beschriebenen oral verabreichbaren Darreichungsform kann der erfindungsgemäße Wirkstoff auch in Form eines Injektionspräparats, also beispielsweise in steriler, zur Injektion geeigneter wäßriger Lösung verabreicht werden.

Im folgenden soll die Erfindung anhand von Beispielen näher erläutert wurden.

Beispiel 1

600 g Lignitpulver werden bei Raumtemperatur in 10 Liter einer 0,4 m KOH-Lösung unter Rühren in das lösliche Kaliumsalz überführt und nach 24 Stunden durch Feststofftrennung (Zentrifuge, Dekanter) von dem alkali-unlöslichen Anteil befreit. Das Sediment wurde verworfen.

Der Überstand (Zentrifugat) wurde nach 4 Wochen bei Raumtemperatur durch portionsweise Zugabe von stark sauren Kunstharz-Ionenaustauschern (Amberlite IR-120 pract) in der $H^+$-Form auf einen schwach sauren pH-Wert von etwa 5,5 gebracht. Nach Abtrennung des Ionenaustauschers wurde eine Probe von 20 ml entnommen und durch Infrarottrocknung bei Oberflächentemperaturen von maximal $75^o$ C eine Trockenstoffbestimmung durchgeführt. Außerdem wurde eine Probe zur Kontrolle der Existenz von stabilen freien Radikalen ESR-spektroskopisch untersucht.

Anschließend erfolgte die Umsetzung mit einer Kobalt(II)-chloridlösung nach folgender Maßgabe: bei $20^o$ C werden unter Rühren zu 100 ml einer 1 %igen sauren Lignitmelanoidinlösung 2,423 ml einer 0,1 m Kobalt(II)-chloridlösung gegeben.

Da die saure Lignitmelanoidinlösung einen Trockenstoffgehalt von 3,29 % besaß, wurden nach der obigen Anweisung zu 100 ml Lösung 7,971 ml einer 0,1 molaren Kobalt(II)-chloridlösung unter Rühren bei $20^o$ C zugesetzt. Auf 3,29 g Trockenstoff der Lignitmelanoidinlösung kamen also 0,187 g $CoCl_2.6H_2O$ ($\sim$58 mg $CoCl_2.6H_2O$/g Trockenstoff der Lignitmelanoidinlösung).

Die so erhaltene saure Lignitchelatlösung ergab ein ESR-Signal (Einlinienspektrum) von 4,6 Gauss Peakbreite bei einer Magnetfeldstärke von 3357,8 Gauss (Varian-E-12-Spektrometer der Fa. Varian, Palo Alto, Kalifornien; 100 kHz Frequenzmodulation, 2 mW Mikrowellenenergie).

Die saure Lignitkobaltchelatlösung wurde entweder bei Temperaturen von weniger als 75° C unter Verwendung eines üblichen Trägerstoffes durch Sprühtrocknung oder ohne Trägerstoff oder durch Gefriertrocknung zur Trockne gebracht. Die zurückbleibende Testsubstanz wurde als Wirkstoff bei den unten beschriebenen Tierfütterungsversuchen eingesetzt.

## Beispiel 2

Gemäß der in Beispiel 1 beschriebenen Arbeitsweise wurde eine saure Lignitmelanoidinlösung mit einem Trockenstoffgehalt von 2,83 % hergestellt. Diese wurde unter den in Beispiel 1 angegebenen Bedingungen mit 8,57 ml einer 0,1 molaren Kobalt(II)-chloridlösung versetzt. Auf 2,83 g Trockenstoff der Lignitmelanoidinlösung kamen also 0,204 g $CoCl_2.6H_2O$ ($\sim$ 72 mg $CoCl_2.6H_2O$/g Trockenstoff der Lignitmelanoidinlösung). Dies bedeutet, daß der Kobaltgehalt des Wirkstoffs in Beispiel 1 etwa 20 % niedriger war als im vorliegenden Beispiel.

Die Trocknung der sauren Lignitkobaltchelatlösung erfolgte wiederum wie in Beispiel 1 beschrieben.

## Beispiel 3

Es wurden Fütterungsversuche mit Sprague Dawley- und SPF-Wistar-Ratten durchgeführt. Die Tiere wurden über 7 Tage an die institutseigene Diät (siehe Tabelle 1) und die Versuchsbedingungen adaptiert und anschließend zu Gruppen von jeweils 8 bis 10 Tieren gleicher Rasse und mit etwa gleichem Ausgangsgewicht zusammengefaßt. Es wurden auf diese Weise drei Versuchsgruppen gebildet, denen die institutseigene Diät mit einem Zusatz des gemäß Beispiels 2 hergestellten Wirkstoffs ad libitum gefüttert wurde. Die optimale Dosis war in Vorversuchen bestimmt worden. Sie betrug 32 mg Wirkstoff /kg Futter. Die Tiere wogen bei Versuchsbeginn durchschnittlich etwa 70 g. Jeder Gruppe wurde eine entsprechende Nullkontrollgruppe von je 18 bzw. 19 Tieren zugeordnet.

Der Wirkstoff war an Weizenmehl gebunden und wurde bis zum Einmischen in die Diät bei 4$^{\circ}$ C gelagert.

Die Versuchsdauer betrug 17 Tage. Die Tiere wurden zu Beginn und am Ende des Versuchs gewogen und die Gewichtszunahme der mit Wirkstoff gefütterten Tiere mit derjenigen der entsprechenden Kontrolltiere verglichen. Die Ergebnisse sind in Tabelle 2 zusammengestellt. Die durchschnittliche Gewichtsmehrzunahme innerhalb der drei Versuchsgruppen gegenüber der jeweiligen Kontrollgruppe betrug 7,8 , 9,9 und 5,7 %.

## Tabelle 1

### "Zuchtfutter grün"

44 %.Weizenschrot

33 % Maisschrot

15 % Sojaschrot

3 % Magermilchpulver

2 % Luzernegrünmehl

2 % Mineralstoffmischung +)

1 % Vitaminmischung
_____

100 %

+) 40      % Kohlensaurer Futterkalk

30      % Phosphorsaurer Futterkalk

24,5    % Viehsalz

5       % Magnesiumphosphat

0,5     % Spurenelemente

Fe: Cu:Mn:Co

5 : 1,5 : 1 : 0,2
_____

100      %

### Vitaminmischung für "Zuchtfutter grün"

| | | |
|---|---:|---|
| Vitamin A | 2000 | IE |
| "        $D_3$ | 20 | IE |
| "        E | 30 | mg |
| "        $K_3$ | 2 | mg |
| "        $B_1$ | 4 | mg |
| "        $B_2$ | 6 | mg |
| "        $B_6$ | 4 | mg |
| Ca-Pantothenat | 8 | mg |
| Nikotinsäure | 8 | mg |
| Cholinsäure | 200 | mg |
| Folsäure | 1 | mg |
| Inosit | 1 | mg |
| Biotin | 80 | mg |

gebunden an Weizenmehl

Tabelle 2

| Gruppe | | Anzahl der Tiere | Gewichtszu- nahme  g | % Mehrzunahme durch Wirk- stoff gemäß Beispiel 2 |
|---|---|---|---|---|
| I | Kontrolltiere | 18 | 100,9 $\pm$ 11,1 | |
| | Versuchstiere | 9 | 108,0 $\pm$ 14,9 | 7,8 |
| II | Kontrolltiere | 18 | 86,6 $\pm$ 10,5 | |
| | Versuchstiere | 9 | 95,6 $\pm$ 9,4 | 9,9 |
| III | Kontrolltiere | 19 | 86,6 $\pm$ 7,1 | |
| | Versuchstiere | 10 | 91,6 $\pm$ 11,8 | 5,7 |

Beispiel 4

Der gemäß Beispiel 1 hergestellte Wirkstoff wurde unter Einhaltung der in Beispiel 3 beschriebenen Versuchsbedingungen getestet. Die Versuchsdauer betrug 21 Tage, die Dosis 50 mg Wirkstoff /kg Futter. Es wurde jedoch nur eine Gruppe von Tieren im Vergleich zu einer Kontrollgruppe beobachtet.

Die Ergebnisse sind in Tabelle 3 zusammengestellt. Die durchschnittliche Gewichtsmehrzunahme der Versuchstiere gegenüber den Kontrolltieren betrug 4,67 %.

Tabelle 3

| Gruppe | Anzahl der Tiere | Gewichtszunahme g | % Mehrzunahme durch Wirkstoff gemäß Beispiel 1 |
|---|---|---|---|
| Kontrolltiere | 20 | 119,9 ± 7,2 | |
| Versuchstiere | 10 | 125,5 ± 4,5 | 4,67 |

Beispiel 5

Erfindungsgemäßer Wirkstoff wurde gemäß dem in Beispiel 1 beschriebenen Verfahren hergestellt. Die Kaliumlignitlösung wurde jedoch vor der Entionisierung säulenchromatographisch über ein Sephadex-Molekularsieb fraktioniert und die Fraktionen mit einem MG größer als 24 000 wurden verworfen. Zur katabolen Blockierung des so gewonnenen Kaliumlignits wurde etwa 25 % weniger Kobalt(II)-chlorid verwendet als in Beispiel 1 beschrieben. Die weitere Verfahrensweise zur Gewinnung des Endproduktes entsprach derjenigen des Beispiels 1.

Das Präparat wurde unter Einhaltung der in Beispiel 3 beschriebenen Versuchsbedingungen getestet.

Die Dosierung betrug 14 mg Wirkstoff /kg Futter. Die Versuchsergebnisse sind in Tabelle 4 zusammengestellt. Die durchschnittliche Gewichtsmehrzunahme innerhalb der drei Versuchsgruppen gegenüber der jeweiligen Kontrollgruppe betrug 5,0 , 9,1 und 4,9 %.

Tabelle 4

| Gruppe | | Anzahl der Tiere | Gewichtszunahme g | % Mehrzunahme durch Wirkstoff gemäß Beispiel 5 |
|---|---|---|---|---|
| I | Kontrolltiere | 18 | 100,9 ± 11,1 | |
| | Versuchstiere | 9 | 106,0 ± 9,3 | 5,0 |
| II | Kontrolltiere | 18 | 86,6 ± 10,5 | |
| | Versuchstiere | 9 | 94,5 ± 14,4 | 9,1 |
| III | Kontrolltiere | 19 | 86,6 ± 7,1 | |
| | Versuchstiere | 9 | 90,9 ± 9,0 | 4,9 |

Beispiel 6

Es wurden Schweinemastversuche mit Absatzferkeln mit einem durchschnittlichen Anfangsgewicht von 15 kg durchgeführt. Jeweils 5 Tiere wurden gemeinsam in einem Stall auf Stroh-Einstreu untergebracht. Futter und Wasser wurden ad libitum angeboten. Bis zu einem Durchschnittsgewicht von 50 kg/Tier wurde eine Anfangsmastdiät und anschließend bis zur Schlachtung ein Endmastfutter verabreicht (siehe Tabelle 5).

Je 5 männliche und weibliche Tiere wurden zu einer Versuchsgruppe zusammengefaßt. Dieser Gruppe wurde Futter mit einem Zusatz von 50 mg Wirkstoff gemäß Beispiel 1 /kg Futter verabreicht. Das Präparat lag gebunden an einen Trägerstoff aus 16,7 % Maisspindelmehl und 83,3 % Maiskleberfutter "fein" vor und wurde bis zur Verwendung bei $4^o$ C gelagert.

Eine Gruppe von 9 Tieren diente als Null-Kontrollgruppe. Dem Futter dieser Tiere wurde nur der Trägerstoff in der entsprechenden Menge zugesetzt (siehe Tabelle 5). Darüber hinaus wurde eine Positiv-Kontrollgruppe eingerichtet. Dem Futter dieser Tiere wurden anstelle des erfindungsgemäßen Wirkstoffs 20 mg eines Antibiotikums/kg Futter zugesetzt.

## Tabelle 5: Futterzusammensetzung

| Futterkomponenten | Anfangsmast (%) | Endmast (%) |
|---|---|---|
| Gerstenschrot | 37,50 | 31,78 |
| Haferschrot | 5,00 | 15,00 |
| Maisschrot | 7,00 | 10,00 |
| Weizenschrot | 24,00 | 19,00 |
| Sojaschrot | 17,50 | 11,00 |
| Weizenkleie | 5,70 | 15,00 |
| Mineralstoffmischung "Teutonia II/a" ohne Vitamin- und Wirkstoffzusatz | 2,00 | 2,00 |
| Wirkstoffmischung (Wachstumsförderer) bzw. Trägerstoff (Null-Kontrolle) | 1,00 | 1,00 |
| Rovimix - 428 | 0,22 | 0,22 |
| | 100 % | 100 % |
| Rohprotein (%) | 16,6 | 14,6 |
| Rohfaser (%) | 4,7 | 5,5 |
| Gesamtnährstoff (%) | 71,1 | 69,6 |

Fortsetzung Tabelle 5

| Vitaminmischung (gebunden an Weizennachmehl): | Vitaminzusätze in mg ( ug; IE) /kg Endfuttermischung |
|---|---|
| Vitamin A    (IE) | 2000 |
| "    $D_3$   (IE) | 400 |
| "    E | 3 |
| "    $B_1$ | 0,4 |
| "    $B_2$ | 1,2 |
| "    $B_6$ | 0,8 |
| "    $B_{12}$ ( ug) | 4 |
| "    $K_3$ | 0,8 |
| Ca-Pantothenat | 2,4 |
| Nicotinsäure | 8 |
| Folsäure | 0,2 |
| Inosit | 1 |
| Biotin    ( ug) | 80 |

Die Versuchsdauer betrug 123 Tage. Die Tiere wurden zu Beginn des Versuches und anschließend einmal wöchentlich gewogen. Die Gewichtsentwicklung der Versuchstiere wurde mit der Null- sowie der Positiv-Kontrollgruppe verglichen.

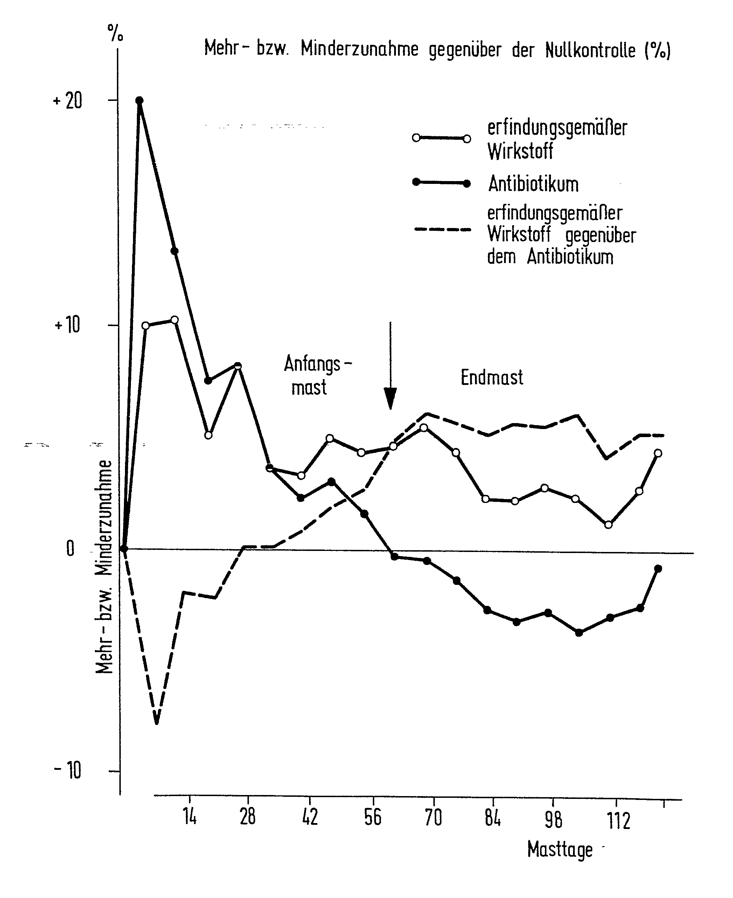

Die Versuchsergebnisse sind in Tabelle 6 und Figur 1 zusammengestellt.

Tabelle 6

| Gruppe | Anzahl der Tiere | Gewichtszu- nahme nach 123 Tagen kg | % Mehrzunahme gegenüber Null-Kon- trolle |
|---|---|---|---|
| Null-Kontrolltiere | 9 | 83,9 ± 9,4 | |
| Antibiotikum- Kontrolltiere | 10 | 83,3 ± 8,0 | - 0,7 |
| Versuchstiere- Wirkstoffmischung | 10 | 87,7 ± 12,6 | + 4,5 |

Der gemäß Beispiel 1 hergestellte Wirkstoff bewirkte gegenüber der Nullkontrolle bis zum Versuchsende einen Gewichtsmehrzuwachs von etwa 5 %, während das Antibiotikum etwa in Übereinstimmung mit der Kontrolle abschloß. Aus Figur 1, in der die Versuchsergebnisse graphisch dargestellt sind, wird deutlich, daß während der ersten Versuchswoche das Antibiotikum eine Mehrzunahme von 20 % gab, während diese beim erfindungsgemäßen Wirkstoff nur 10 % betrug. Bis zum Beginn der Endmast glich sich aber der Wert für das Antibiotikum bereits an die Nullkontrolle an, während die mit erfindungsgemäßem Wirkstoff gefütterte Gruppe eine Mehrzunahme von insgesamt etwa 5 % bis zum Versuchsende halten konnte.

Der Effekt des Antibiotikums wird vermutlich durch eine langsam anlaufende Steigerung der Corticosteroid- bzw. Tyroxinproduktion innerhalb von 7 bis 8 Wochen ausgeglichen, während im Falle des erfindungsgemäßen Wirkstoffs offensichtlich die, eine bleibende Mehrzunahme störende, endogene Bereitstellung kataboler Faktoren durch die gleichzeitige Zuführung eines gewebeunspezifischen, katabolen Faktors unterlaufen wird.

### Beispiel 7

102 g Lignitpulver wurden bei Raumtemperatur in 1700 ml einer 0,3 m Kaliumhydroxidlösung unter Rühren in das lösliche Kaliumsalz überführt und nach 24 Stunden durch Feststofftrennung (Zentrifuge) von dem alkali-unlöslichen Anteil befreit. Das Sediment wurde verworfen und die Lösung 28 Tage bei Raumtemperatur unter Ausschluß von Licht aufbewahrt. Danach wurde die Lösung durch portionsweise Zugabe von Amberlite-IR 120 pract. ($H^+$-Form) auf ein pH-Wert von 5,5 gebracht. Eine nach dem Abtrennen des Ionenaustauschers entnommene Probe von 100 g ergab einen Trockenmassegehalt von 3,93 % (G/G).

Portionen von jeweils 250 g der so erhaltenen Lösung wurden mit verschiedenen Metallsalzlösungen versetzt und anschließend ESR-spektroskopisch untersucht. Es wurde wie folgt vorgegangen.

a) Kontrolle (Lignit-Lösung ohne Metallzusatz)

b) Umsetzung mit Kobalt(II)-chloridlösung:

Zu der Lignit-Lösung (250 g) wurden 23,95 ml einer 0,1 molaren Kobalt(II)-chloridlösung unter Rühren bei 20° C zugegeben, so daß wie in Beispiel 1 etwa 58 mg $CoCl_2 \cdot 6H_2O$ auf 1 g Trockenstoff der Lignit-Lösung kamen. Die Gesamtaktivität nach Zusatz der Kobalt(II)-chloridlösung betrug 10,13 g in 273,95 g Lösung entsprechend einem Trockenstoffgehalt von 3,70 % (G/G).

c) Umsetzung mit Nickel(II)-chloridlösung:

Die Lignit-Lösung (250 g) wurde mit 23,95 ml einer 0,1 m Nickel(II)-chloridlösung unter Rühren bei 20° C versetzt, so daß 57,95 mg $NiCl_2 \cdot 6H_2O$ auf 1 g Trockenstoff der Lignit-Lösung kamen (äquimolare Menge zu Kobalt gemäß b)). Die Gesamtaktivität nach Zusatz der Nickel(II)-chloridlösung betrug 10,13 g in 273,95 g Lösung entsprechend einem Trockenstoffgehalt von 3,70 % (G/G).

d) Umsetzung mit Eisen(II)-sulfatlösung

Die Lignit-Lösung (250 g) wurde mit 23,9 ml einer 0,1 m Eisen(II)-sulfatlösung unter Rühren bei 20° C versetzt, so daß 67,75 mg $FeSO_4 \cdot 7H_2O$ auf 1 g Trockenstoff der Lignit-Lösung kamen (äquimolar zu Kobalt gemäß b)). Die Gesamtaktivität nach dem Zusatz der Eisen(II)-sulfatlösung betrug 10,19 g in 273,9 g Lösung entsprechend einem Trockenstoffgehalt von 3,72 % (G/G).

e) Wie unter d) beschrieben wurde die Lignit-Lösung (250 g) mit einer 0,1 m Eisen(II)-sulfatlösung behandelt. Um den Eisengehalt jedoch um 20 % zu erhöhen, wurden diesmal 28,73 mg Eisen(II)-sulfatlösung zugesetzt, so daß 81,3 g $FeSO_4 \cdot 7H_2O$ auf 1 g Trockenstoff der Lignit-Lösung kamen. Die Gesamtaktivität nach dem Zusatz der Eisen(II)-sulfatlösung betrug 10,26 g in 278,73 g Lösung entsprechend einem Trockenstoffgehalt von 3,68 % (G/G)).

Die nach Umsetzung mit den verschiedenen Metallsalzlösungen erhaltenen Lignitchelat-Lösungen wurden ESR-spektroskopisch (Varian-E-12-Spektrometer) untersucht. Dabei ergaben sich die in der folgendne Tabelle wiedergegebenen relativen Intensitäten der ERS-Signale für die verschiedenen Produkte.

## Tabelle  7

| Produkt | relative Intensität des ESR-Signals |
|---------|-------------------------------------|
| a       | 763                                 |
| b       | 530                                 |
| c       | 459                                 |
| d       | 380                                 |
| e       | 316                                 |

PATENTANSPRÜCHE

1. Biochemischer Wirkstoff mit anaboler Bioaktivität zur Beeinflussung des intrazellulären und systemischen Metabolismus höherer Organismen, dadurch gekennzeichnet, daß er aus wasserlöslichen, sauren Inkohlungsprodukten lignoider Naturstoffe in Form entkationisierter Alkalisalze besteht, deren katabole Aktivität durch Umsetzung mit Spurenmetallionen definiert inhibiert ist.

2. Wirkstoff nach Anspruch 1, dadurch gekennzeichnet, daß die katabole Aktivität durch Umsetzung mit Kobaltsalzen definiert inhibiert ist.

3. Wirkstoff nach Anspruch 2, dadurch gekennzeichnet, daß er, bezogen auf Trockenbasis, 5 bis 50 mg und vorzugsweise 13,0 bis 17,5 mg Kobalt/g enthält.

4. Verfahren zur Herstellung des Wirkstoffs gemäß Anspruch 1, bei dem man Inkohlungsprodukte lignoider Naturstoffe mit wäßriger Alkalihydroxidlösung behandelt und die resultierende Lösung von nicht echt ·gelösten Schwebstoffen befreit, dadurch gekennzeichnet, daß man

a) den pH-Wert dieser Lösung auf schwach saure Werte einstellt,

b) die schwach saure Lösung unter Rühren mit einer zur definierten Inhibierung der katabolen Aktivität der Inkohlungsprodukte von Lignin ausreichenden Menge einer Spurenmetallsalzlösung versetzt und

c) die resultierende Reaktionsmischung gegebenenfalls nach Zusatz eines für den Wirkstoff geeigneten Trägermaterials bei maximal 75$^{\circ}$ C trocknet.

5. Verfahren nach Anspruch 4, dadurch gekennzeichnet, daß man als natürliches Inkohlungsprodukt Lignit verwendet.

6. Verfahren nach den Ansprüchen 4 bis 5, dadurch gekennzeichnet, daß man die pH-Werteinstellung in Stufe a) durch portionsweise Zugabe von stark sau-

ren Ionenaustauschern in der Wasserstofform bewirkt.

7. Verfahren nach den Ansprüchen 4 bis 6, dadurch gekennzeichnet, daß man den pH-Wert in Stufe a) auf 5,0 bis 6,5 einstellt.

8. Verfahren nach den Ansprüchen 4 bis 7, dadurch gekennzeichnet, daß man als Spurenmetallsalzlösungen Lösungen von Kobalt-, Eisen-, Kupfer-, Nickel-, Mangan- und/oder Zinksalzen verwendet.

9. Verfahren nach den Ansprüchen 4 bis 8, dadurch gekennzeichnet, daß man als Trägermaterial Maisspindelmehl, Weizennachmehl, andere Mühlennachprodukte oder übliche anorganische Trägerstoffe verwendet.

10. Verfahren nach den Ansprüchen 4 bis 9, dadurch gekennzeichnet, daß man in Stufe c) gefriertrocknet.

11. Mittel, insbesondere Futtermittelzusatz oder Injektionspräparat zur Förderung des Wachstums bzw. zur Anwendung bei Stoffwechselstörungen von höheren Organismen, das gegebenenfalls übliche Zusätze, Hilfsstoffe und/oder Trägermaterialien enthält, dadurch gekennzeichnet, daß es den Wirkstoff gemäß den Ansprüchen 1 bis 3 allein oder in Kombination mit anderen Wirkstoffen enthält.

Mehr- bzw. Minderzunahme gegenüber der Nullkontrolle (%)

○——○ erfindungsgemäßer Wirkstoff

●——● Antibiotikum

- - - erfindungsgemäßer Wirkstoff gegenüber dem Antibiotikum

Anfangs-mast

Endmast

Mehr- bzw. Minderzunahme (%)

Masttage

1/1

0087726